# EUROPEAN PATENT APPLICATION

(11) **EP 4 782 819 A1**
(43) Date of publication of application: **29.07.2026**
(21) Application number: 25154104.1
(22) Date of filing: 27.01.2025
(51) Int. Cl.: G01N 21/63, G02B 21/00, G01J 3/44

(54) **METHOD AND SYSTEM FOR BRILLOUIN MICROSCOPY WITH ADAPTIVE MEASUREMENT TIMES**

(71) Applicant: CellSense Technologies GmbH, 12489 Berlin (DE)
(72) Inventor: OLIYNYK, Vitaliy, Königs Wusterhausen (DE); SCHLÜßLER, Raimund, Dresden (DE); JÄHNKE, Torsten, Schulzendorf (DE)
(74) Representative: Steffens, Adrian

(57) **Abstract**

A method for Brillouin microscopy is disclosed. The method comprises: scanning a sample (12) in a medium (19) with focused laser light along a plurality of scanning areas (21); during the scanning of the sample (12), for a current scanning area (22) of the scanning areas (21) currently being irradiated with the focused laser light: determining a measurement time for the current scanning area; and determining, using a detector (15), of a plurality of spectral measurement values from scattered light scattered from the current scanning area (22) for the duration of the measurement time; wherein the measurement time is determined using a quality metric with respect to a target quality metric which is indicative of at least one of a signal quality, a goodness of fit, a peak shape, and a peak height of a Brillouin peak (34).

## Description

The present disclosure refers to a method and a system for Brillouin microscopy.

### Background

Brillouin microscopy is an optical technique based on the principle of Brillouin scattering of light. This method is used to obtain information about mechanical properties of materials at the microscopic level. When light hits a material, it can interact with phononic vibrations (latent waves) of the material. This interaction leads to a frequency shift of the scattered light, known as Brillouin shift. The frequency shift depends on the acoustic properties of the material. Brillouin microscopy is often used to study mechanical properties of samples, such as elasticity, viscosity, and stiffness. This technique is also used in biomedical research to study the properties of cells, tissues, organoids, and organisms.

Brillouin microscopy enables high spatial resolution, making it ideal for characterizing small samples. As the technique is based on the scattering of light, it is non-invasive and causes no damage to the samples.

For many applications, a large number of scanning areas needs to be scanned. Due to a comparably low probability of Brillouin scattering processes occurring, each of the scanning areas may require a substantial amount of time for obtaining a sufficient amount of data.

### Summary

It is therefore an object of the present disclosure to establish a method for performing Brillouin microscopy at an increased rate while maintaining high quality of the measured data.

For solving the problem, a method and a system for Brillouin microscopy according to the independent claims are provided. Further embodiments are disclosed in dependent claims.

According to one aspect, a method for Brillouin microscopy is provided. The method comprises:
- scanning a sample in a medium with focused laser light along a plurality of scanning areas;
- (for multiple of the scanning areas) during the scanning of the sample, for a current scanning area of the (multiple of the) scanning areas (in particular, for each current scanning area of the scanning areas) currently being irradiated with the focused laser light (which is currently irradiated with the focused laser light):

- determining a measurement time (only) for the current scanning area; and
- determining, using a detector, of a plurality of spectral measurement values from (Brillouin-)scattered light scattered from the current scanning area for the duration of the measurement time (exposure time, acquisition time).

The measurement time is determined using a quality metric (peak quality metric) with respect to a target quality metric (target peak quality metric) which is indicative of (and/or comprises) at least one of a signal quality (e.g., of the spectral measurement values), a goodness of fit, a peak shape, and a peak height of a Brillouin peak.

According to another aspect, a system for Brillouin microscopy is configured to carry out the above method. The system may comprise at least one of a laser source, an optical fiber, an optical coupler, a beam splitter, a mirror, an objective, a sample container, a (sample) stage, an illumination unit, a condenser, a camera, a detector, and a data processing unit.

Determining the plurality of spectral measurement values from scattered light may comprise collecting measurement data from the scattered light (for the duration of the measurement time) and/or, in particular, counting photons (preferably with a sensor) of the scattered light (for the duration of the measurement time).

The measurement time may be determined such that the quality metric is controlled towards the target quality metric or conforms to the target quality metric. The quality metric may be indicative of (and/or comprise) at least one of a goodness of fit, a peak shape, and a peak height of a (measured) Brillouin peak (of the spectral measurement values) or a previous (measured) Brillouin peak (of previous spectral measurement values of a previously scanned scanning area, preferably the scanning area preceding the current scanning area).

Determining the measurement time may comprise comparing the quality metric with the target quality metric (also during control of the measurement time, e.g., with the target quality metric being a setpoint and the quality metric being a process variable).

The measurement time for the current scanning area may be determined before and/or during and/or after determining the plurality of spectral measurement values (from the scattered light scattered from the current scanning area for the duration of the measurement time).

The target quality metric, in particular the goodness of fit and/or the peak height, may be set such that a Brillouin shift and/or a Brillouin width is determinable (with a predetermined degree of accuracy and/or from the spectral measurement values).

Scanning the sample in the medium with focused laser light along the plurality of scanning areas may comprise successively providing the focused laser light at (and/or moving the focused laser light to) each of the scanning areas and determining (corresponding) spectral measurement values for (each of) the scanning areas. For example, the focused laser light may be provided at and/or moved to a first scanning area and first spectral measurement values may be determined for the duration of a first measurement time. Subsequently, the focused laser light may be provided at and/or moved to a second scanning area and second measurement values may be determined for the duration of a second measurement time. The preceding step may be repeated until (corresponding) spectral measurement values are determined for each of the scanning areas. The scanning of the sample may comprise scanning with a plurality of scan lines, each comprising multiple of the scanning areas. The scanning may also comprise multiple scan planes (e.g., arranged vertically on another), each comprising multiple scan lines and/or multiple of the scanning areas. The scattered light may be scattered from the focused laser light in the corresponding one of the scanning areas, in particular in the current scanning area.

The signal quality may be determined by a signal-to-noise ratio, in particular a ratio (quotient) of a signal value and a noise value, e.g., a quotient of a signal power value and a noise power value. The noise value may be indicative of background noise. The background noise may be measured, for example, by blocking the scattered light from the detector, or be determined from spectral measurement values between a Rayleigh peak and a Brillouin peak. The signal value may be determined from a height of the Rayleigh peak and/or the Brillouin peak. The signal value may also be determined from a root mean square value of the spectral measurement values. The signal-to-noise ratio (for the target quality metric) may, e.g., be set to a value of at least 1, preferably of at least 5, more preferably of at least 10.

Additionally or alternatively, the goodness of fit may be determined by at least one of a root mean square error, a coefficient of determination (*R*²), and a *χ*² value (e.g., via a *χ*² test), preferably using the spectral measurement values and spectral fitted values. Other methods for determining the goodness of fit may be employed, e.g., a Kolmogorov-Smirnov test. Determining the goodness of fit may comprise fitting the spectral measurement values (in particular around the Brillouin peak). The spectral measurement values may be fitted using at least one of a Lorentz curve, a Gaussian curve, a linear combination of Lorentz curves, and a linear combination of Gaussian curves.

Additionally or alternatively, the peak height may be determined with respect to background noise of the spectral measurement values, in particular, as a multiple or an (additive) offset from the background noise of the spectral measurement values. Additionally or alternatively, the peak shape may be determined by at least one of a peak width value, (e.g., as a full width at half maximum value), a number of peak maxima (e.g., a number of splits of the peak), and a noise level of the Brillouin peak. The (target) peak height may, e.g., be 5 times greater, preferably 10 times greater than a background noise height.

The method may comprise determining sample properties from the spectral measurement values and/or the spectral fitted values.

The measurement time may be determined using a control system with a setpoint being the target quality metric and a process variable comprising the quality metric and/or further previous quality metrics of further previously scanned scanning areas.

For example, the quality metric may be indicative of (and/or comprise) at least one of a signal quality, a goodness of fit, a peak shape, and a peak height of a previous (measured) Brillouin peak (of previous spectral measurement values of a previously scanned scanning area, preferably the scanning area preceding the current scanning area). The quality metric and/or the further previous quality metric may be indicative of (and/or comprise) further previous (measured) Brillouin peaks (of further previous spectral measurement values of the further previously scanned scanning areas, preferably before previously scanned scanning area).

The manipulated variable / control variable (of the control system) may thus be the measurement time. The target quality metric and/or the setpoint may be constant or variable for the entire scan (of all scanning areas, i.e., of the total scanning area).

The measurement time may be determined (directly) by the control system. Alternatively, the measurement time may be determined from at least one intermediate quantity determined by the control system.

The control system may comprise one of a PID controller, a PI controller, a PD controller, and a fuzzy (logic) controller (FLC). The control system may be included in the data processing unit.

The measurement time may be determined from (determined as a sum of) partial measurement times by collecting measurement data from the scattered light from the current scanning area for the spectral measurement values for the duration of one of the partial measurement times, determining the quality metric from the spectral measurement values, and comparing the quality metric with the target quality metric.

The above steps (the steps for determining the measurement time from the partial measurements times) may preferably be repeated until the quality metric conforms to the target quality metric, wherein the partial measurement times are run through successively (consecutively). In other words, the above steps may be repeated with a next one of the partial measurement times (for each repetition).

The measurement time may be the sum and/or be determined as the sum of the partial measurement times used in the above steps (used in the steps for determining the measurement time from the partial measurements times). Hence, the measurement time may be greater than each of the partial measurement times.

Collecting the measurement data may comprise counting photons of the scattered light (with the sensor). Collecting the measurement data may be interrupted or be free of interruption when (and/or by) determining the quality metric and/or comparing the quality metric with the target quality metric.

For example, the partial measurement times may each be between 0.1 ms and 300 ms, preferably between 1 ms and 100 ms, more preferably between 5 ms and 20 ms. Using small partial measurement times may lead to a better fine-tuning of the measurement time but, on the other hand, lead to increased read out noise.

The quality metric conforming to the target quality metric may comprise the quality matric being equal to, being not smaller than, being not greater than, being not smaller up to a factor than, or being not greater up to a factor than the quality target metric. The factor may be between 90 % and 110 % (with respect to the target quality metric or the quality metric).

In case of determining the measurement time from partial measurement time, the target quality metric may be indicative of (and/or comprise) a minimum goodness of fit and/or a minimum peak height. For example, the quality metric conforming to the target quality metric may comprise the peak height of the Brillouin peak being equal to, being not smaller than, or being not smaller up to a factor than the minimum peak height. Alternatively, the quality metric conforming to the target quality metric may comprise the goodness of fit of the Brillouin peak being equal to, being not smaller than, or being not smaller up to a factor than the minimum goodness of fit (e.g., a minimum *χ*² value).

The partial measurement times may (at least partially) be determined from an initial measurement time, preferably from a fraction of the initial measurement time. For example, the partial measurement times may be between 1 % and 30 % of the initial measurement time.

The initial measurement time may be determined by the control system. Thus, the control system may provide an estimate for the partial measurement times.

The partial measurement times may be identical (i.e. equal to a (single) partial measurement time). In this case, the measurement time may be determined from the partial measurement times by collecting measurement data from the scattered light from the current scanning area for the spectral measurement values for the duration of the partial measurement time, determining the quality metric from the spectral measurement values, comparing the quality metric with the target quality metric, and repeating the above steps until the quality metric conforms to the target quality metric.

Alternatively, an earliest partial measurement time may be greater than (all) later partial measurement times. In particular, the partial measurement times may successively decrease (with time and/or with each repetition). Hence, the closer the quality metric to the target quality metric, the shorter the partial measurement times.

The method may further comprise interpolating or redetermining, using the detector, of previous spectral measurement values for at least one previously scanned scanning area based on a Brillouin shift and/or a Brillouin width being determinable from the previous spectral measurement values (with a predetermined degree of accuracy).

Using such an interpolation or redetermination, the target quality metric may be relaxed and the measurement times may be further decreased.

A total number of scanning areas (pixels / scanning points / scanning volumes / scanning cells) (for scanning the sample) may be between 10¹ and 10¹⁰, preferably between 10² and 10⁶, more preferably between 10⁴ and 10⁵.

The number of scanning areas per scan line can, e.g., be between 5 and 50 000. The number of scan lines per sample scan may be between 5 and 50 000. Hence, a scanning map for the sample may comprise between 5 x 5 and 50 000 x 50 000 scanning areas (pixels). Preferably, the system may comprise between 10 x 10 and 2 000 x 2 000 scanning areas.

Each of the scanning areas may have a length and/or a width between 0.1 µm and 2000 µm, preferably between 0.5 µm and 100 µm.

During scanning, scanning along scan lines may start at the same side of the scanning map. Alternatively, scanning along the scan lines may start at alternating sides of the scanning map. This way, control of the measurement time for the current scanning area may be based on information of locally close previous scanning areas from a previous scan line.

The camera and/or the detector may be configured to receive and/or measure the scattered light (and/or parts of the scattered light). The camera may be configured for optical observation of the sample and/or used for control (in view of the optical observation).

The detector may comprise a sensor (for receiving the scattered light), preferably being one of a CCD sensor, an EMCCD sensor, a CMOS sensor, and an sCMOS sensor.

The detector may further comprise a spectrometer. The spectrometer may for example comprise a virtually imaged phased array (VIPA) or a Fabry-Pérot interferometer. Thus, high spectral resolution may be achieved. The spectral measurement values may be provided and/or determined using the spectrometer and/or the sensor. For example, by the spectrometer, filtered light may be determined from the scattered light. Further, the spectral measurement values may be determined by the detector (e.g., from the filtered light and/or the scattered light). The detector and/or the sensor may be connected to and/or communicatively coupled with the data processing unit.

The data processing unit may comprise at least one processor and at least one memory. The data processing unit may be embodied in a single device. For example, the data processing unit may be a data processing device, such as a computer or a microcontroller. The data processing unit may also be distributed over a plurality of data processing devices.

The sample may be a biological sample comprising at least one of a cell, a part of a cell, cellular tissue, and an organoid. The medium may comprise or be a liquid. The medium may also comprise or be a gel. The medium may comprise at least one of a culture medium, a growth medium, a liquid nutrient medium, a lysogeny broth medium, agar, glucose, salts, water, and amino acids.

The laser source may be configured to provide laser light. The laser light and/or the scattered light may pass at least one of the optical fiber, the optical coupler, the beam splitter, the mirror, and the objective. The scattered light and/or background light (from the illumination unit, in particular the condenser, and passing the sample) may be received in the camera and/or the detector. The beamsplitter may be configured to direct the backscattered light and/or the background light towards the detector and/or the camera.

The objective may be configured to focus the laser light as focused laser light at the active scanning area. The objective may be further configured to provide image magnification, e.g., between 10x and 100x, preferably between 10x and 60x, more preferably between 20x and 40x. A scanning time per scanning area may be between 1 ms and 10 s, preferably between 10 ms and 1 s. The objective may comprise an objective lens. The objective may have a numerical aperture between 0.5 and 1.25.

The focused laser light may for example (be configured to) induce elastic scattering (in particular Rayleigh scattering) and/or inelastic light scattering (in particular Brillouin scattering). The (Brillouin-)scattered light may thus be indicative of Brillouin scattering and/or of Rayleigh scattering. The focused laser light may also induce further types of inelastic light scattering.

The focused laser light may have a wavelength between 350 nm and 1 200 nm, preferably between 600 nm and 800 nm. More preferably, the focused laser light may have a wavelength between 770 and 790 nm. Thus, phototoxic irradiation can be avoided. The focused laser light may have a line width less than 1 MHz (corresponding to 2 fm in terms of wavelength at 780 nm central wavelength), preferably less than 100 kHz (corresponding to 0.2 fm in terms of wavelength at 780 nm central wavelength).

The focused laser light may have a laser power 1 mW and 300 mW, preferably between 10 mW and 200 mW (at the laser focus and/or laser spot and/or at the active scanning area).

The focused laser light may have a laser focus size / laser spot size (in particular, an 1/e² spot diameter) at the sample (in particular at the active scanning area) between 0.05 µm and 20 µm (preferably between 0.5 µm and 2.0 µm) and/or between 0.1 and 2 scanning areas lengths and/or between 0.1 and 2 scanning areas widths.

The sample container may be configured to contain the sample. The sample container may for example be a Petri dish, a slide, a coverslip, a flow cell, a well plate, or a well from a well plate. The sample container may be arranged on the stage. The stage may be movable in two horizontal directions (which are orthogonal to each other). In other words, the stage may be movable in two directions parallel to a stage surface along which the stage extends. Alternatively, a microscope body and/or a casing below (or above) the stage may be movable in the two horizontal directions. The objective may be movable in a vertical direction (orthogonal to the two horizontal directions) and/or be movable in the two horizontal directions. At least one of the stage, the microscope body, the casing, and the objective may be manually movable or may be movable by a corresponding motor and/or piezo drive. An additional movement device may be arranged between the stage and the sample container (e.g., on the stage) for providing relative movement in a vertical direction and/or at least one horizontal direction.

The system may be arranged as an inverted microscope or as an upright microscope. In other words, the objective may be arranged below the stage or above the stage. The system may further be arranged as a confocal microscope.

Steps described above may be carried out (at least partially) in the data processing unit, for example at least one of (but not restricted thereto): determining the measurement time, determining the quality metric (in particular determining the goodness of fit and/or the peak height), and interpolating the previous spectral measurement values.

At least one of the laser source, the mirror, the objective (in particular its movement), the stage (in particular, its movement), the detector, the sensor, and the camera may be controllable by and/or connected to the data processing unit.

The embodiments described above in connection with the method for Brillouin microscopy may be provided correspondingly for the system. In the context of this disclosure, interval information (e.g., "between ... and", "from ... to") is to be understood as including the interval ends. Further, the expression "at least one of" may also include the combination of all respective elements.

### Brief description of drawings

In the following, embodiments, by way of example, are described with reference to drawings.
- Fig. 1: shows a graphical representation of a system for Brillouin microscopy.
- Fig. 2a: shows a graphical representation of a scanning process of a sample.
- Fig. 2b: shows another graphical representation of the scanning process of a sample.
- Fig. 3: shows a graphical representation of a detector including a spectrometer and a sensor.
- Fig. 4: shows a graphical representation of a Brillouin spectrum.
- Fig. 5: shows a graphical representation of a scanning map for a sample.
- Fig. 6: shows a graphical representation of Brillouin spectra for different measurement times.

### Detailed description

### Setup

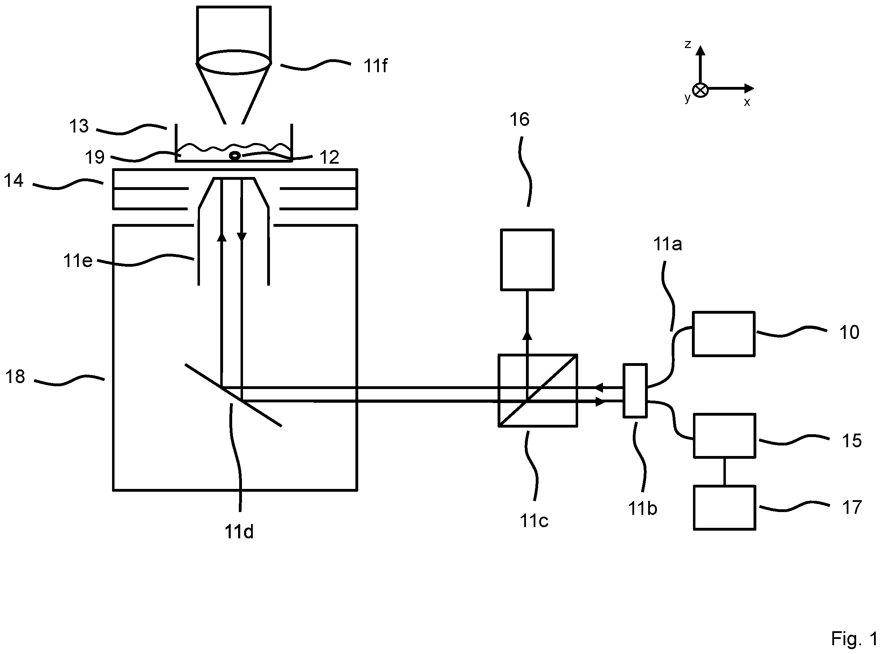

Fig. 1 shows a graphical representation of a system for Brillouin microscopy. Laser light from a laser source 10, e.g., a laser, is directed via optical elements 11a-11e (in particular, an optical fiber 11a, an optical coupler 11b, a beam splitter 11c, a mirror 11d, and an objective 11e) towards a sample 12 (specimen) such as a cell in a medium 19 located in a sample container 13, e.g., a Petri dish, a slide, a well plate, or a well from a well plate. The sample container 13 is arranged on a stage 14, which is movable in an x- and a y-direction (parallel to a stage surface along which the stage 14 extends). The objective 11e, e.g., an objective lens, is movable in a z-direction (orthogonal to the surface along which the stage 14 extends) and provides focus for the laser light, resulting in focused laser light in scanning areas along the sample 12.

The objective 11e may have a high numerical aperture (NA). For the majority of biological and soft-matter samples, air-objectives or immersion-objectives with numerical aperture in the range between 0.5 to 1.25 are used.

Background light is provided from an illumination unit via a condenser 11f. Further mirror elements may be provided for aligning and/or directing laser light and/or scattered light.

Light passing the sample 12 or emitted by the sample 12 including scattered light passes the objective 11e and is fed to detector 15, comprising a spectrometer 30, and a (brightfield) camera 16 for optical observation and/or control. The detector 15 is connected with a data processing unit 17. Alternative to the stage 14 being movable, the objective 11e (together with mirror 11d) and a surrounding casing 18 may be movable in an x- and a y-direction.

The sample 12 may be observed from below with the objective 11e being arranged below the stage 14 (inverted microscope setup) as shown in Fig. 1. Alternatively, the sample 12 may be observed from above with the objective 11e being arranged above the stage 14 (upright microscope setup - not shown). An inverted microscope is beneficial when working with life samples at the bottom of the sample container 13, as it minimizes disturbances, e.g., due to light passing water.

For observing the sample 12 and for navigating, brightfield illumination may for example be used. Other contrast methods may be used such as differential interference contrast (DIC) or phase contrast which provide enhanced contrast for nearly optical transparent samples. When the sample 12 is illuminated, it becomes visible against the bright background, which allows for easy alignment and positioning during measurements. For moving the sample 12 relative to a fixed optical focus position in the horizontal (x-y-)plane, the stage 14 is manually movable or motorized. For focusing on a specific sample area in a vertical (z-)direction, a manual or a motorized focus drive may be provided for moving the objective 11e up or down with precise steps in the vertical direction. After finding an area of interest on the sample 12, the spectroscopic mapping can start.

The laser source 10 provides laser light with a wavelength suitable for Brillouin scattering (which for biological samples is typically near-infrared, e.g., 780nm). The laser light is focused on the sample 12 by the objective 11e with, e.g. 20× or 40× magnification and a numerical aperture of 0.5. The laser light has a typical power of 10mW in the focus of the objective 11e.

### Scanning

A typical scanning map 20 of 100 × 100 scanning areas 21 (pixels) with a mash width of 1 µm has a 100 × 100 µm² mapping area. Scanning can be carried out by moving the stage 14 in a (raster) scanning manner. To this end, the stage 14 is motorized and controlled by software, e.g., in the data processing unit 17. There are different forms of motorized stages 14 with differences in motion controls, mechanical bearings or the choice of mechanical drive as well as the use of a positioning sensor system. For example, the stage 14 may be moved by a stepper motor, a linear motor, or a piezo drive. The stage 14 is configured to accommodate the sample container 13, e.g., a standard sample holder such as a microscope slide, a Petri dish, a coverslip, a well plate, or other fluid cells.

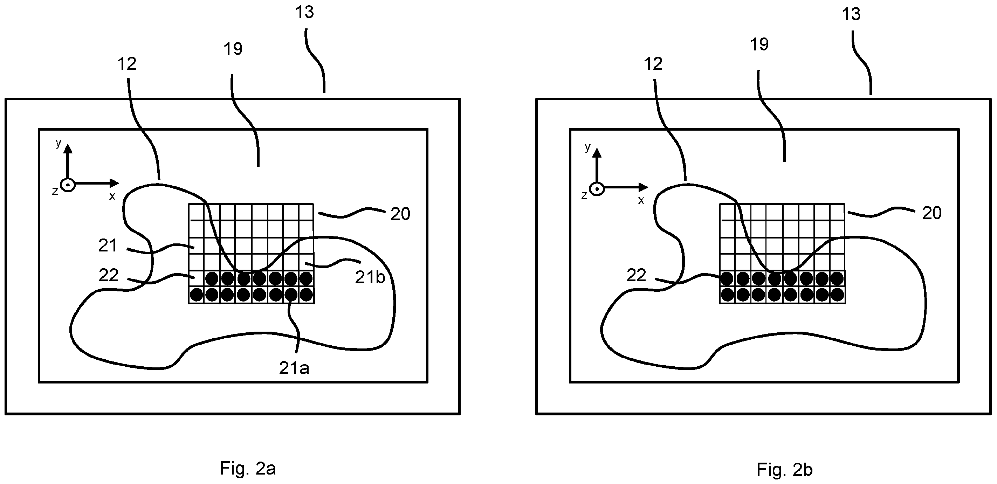

Fig. 2a and Fig. 2b show graphical representations of a scanning process along scanning areas 21 of a scanning map 20 of a sample 12. In the figures, previously scanned scanning areas 21a are marked with black circles; not yet scanned scanning areas 21b are left empty. The focused laser light is focused in a current scanning area 22 (active scanning area, present scanning area) and corresponding scattered light from the current scanning area 22 is received in the detector 15.

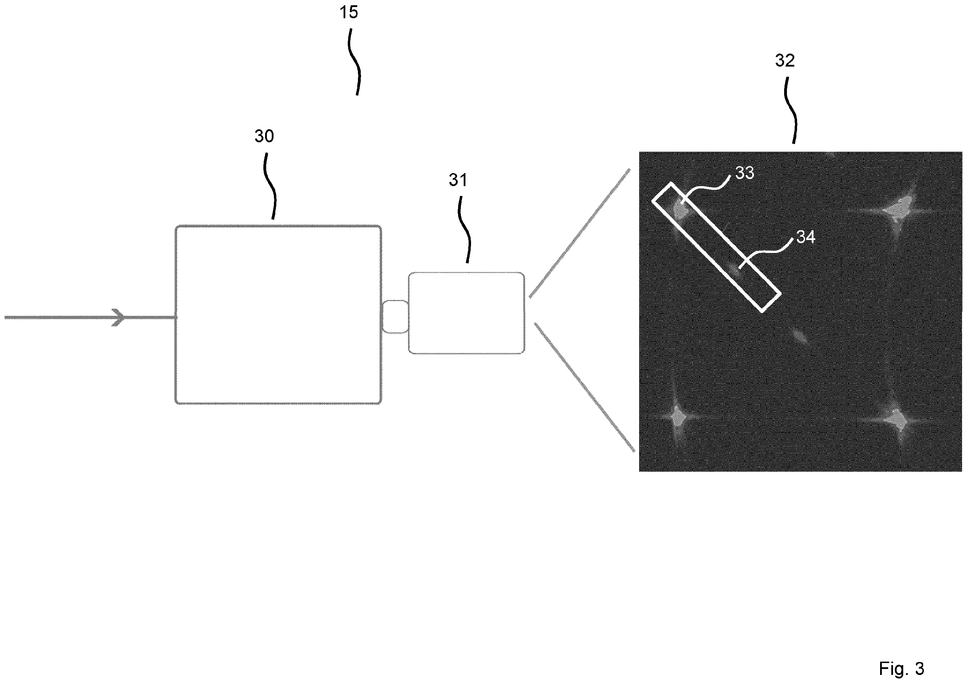

The detector 15 is configured to capture scattered light, which will appear as frequency shifts from the laser light. The scattered light is analyzed using the spectrometer 30 to, e.g. resolve Brillouin peaks associated with acoustic phonons in the sample 12 (see Fig. 3). The spectrometer 30 may be based on a virtually imaged phased array (VIPA) interferometer, which provides sufficient spectral resolution to detect minute frequency shifts of the scattered light due to Brillouin-scattering, which typically is in the range between 0.1 GHz and 50 GHz.

The filtered light by the spectrometer is detected by a sensor 31 (detector camera), where photons with different frequency shifts are registered (counted) by different pixels on the sensor 31, yielding a sensor image 32 with a Rayleigh peak 33 and a Brillouin peak 34. The sensor 31 for capturing the scattered light and/or filtered light may be a CCS sensor, a CMPS sensor, an sCMOS sensor, or an EMCCD. Furthermore, an intensity value of a sensor pixel is proportional to the number of photons it has registered. In other words, a spectrum of scattered light is imaged by the sensor 31.

The sensor 31 / detector camera is typically selected so that it provides high sensitivity (typically, a quantum efficiency of 50 % to 95 %), low read noise and dark current noise (both below 2.0 e⁻), and capable of exposure times between 0.1 ms to 2000 ms. The sensor pixels are typically pre-calibrated to frequency space using one or more separate measurements of samples 12 with known frequency shifts of a Brillouin-peak (for example, laser light with a wavelength of 785 nm provides a shift in pure water of 5.1 GHz, in methanol of 3.6 GHz, and in ethanol of 4.2 GHz.

The determined data provides insights into mechanical properties of the sample 12. The determined frequency shifts are analyzed in the data processing unit 17 using appropriate software tools. Such an analysis allows for determining mechanical parameters such as the speed of sound and the viscoelastic properties of the sample 12. The combination of an inverted microscope setup with brightfield illumination and Brillouin scattering allows for studying the mechanical properties of samples 12 in a non-invasive manner.

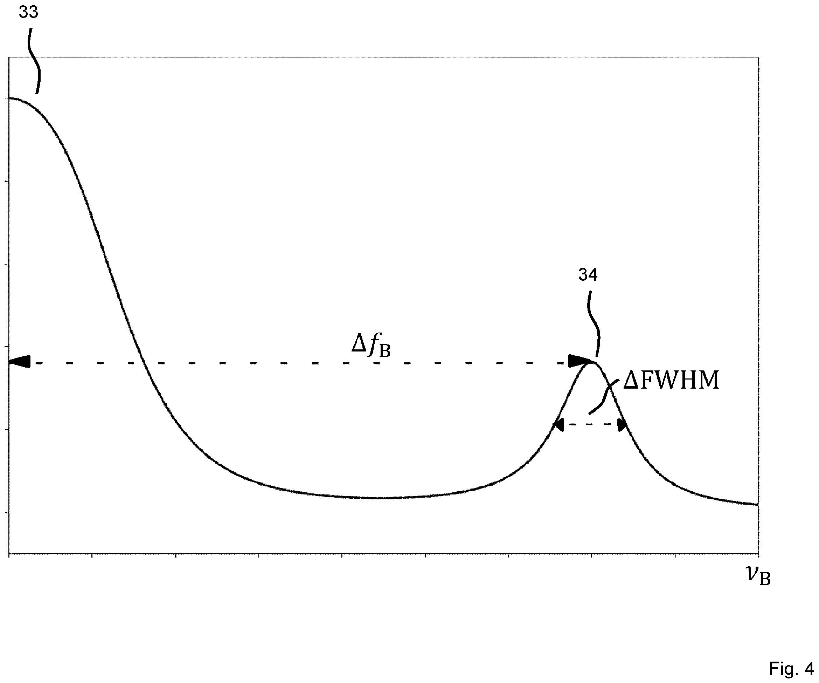

Fig. 4 shows a plot of a spectrum / spectral measurement values (intensity as a function of frequency *v_{B}*) for a single scanning area 21. The spectral measurement values comprise the Rayleigh peak 33 and the Brillouin peak 34, the latter corresponding to the scattered photons of the light. The frequency shift Δ*f_{B}* of the Brillouin peak 33 (Brillouin shift) and the width of the Brillouin peak (Brillouin width) ΔFWHM (full width at half maximum) are directly related to the mechanical properties of the sample 12 under the focus of the laser, such as longitudinal compressibility or viscosity.

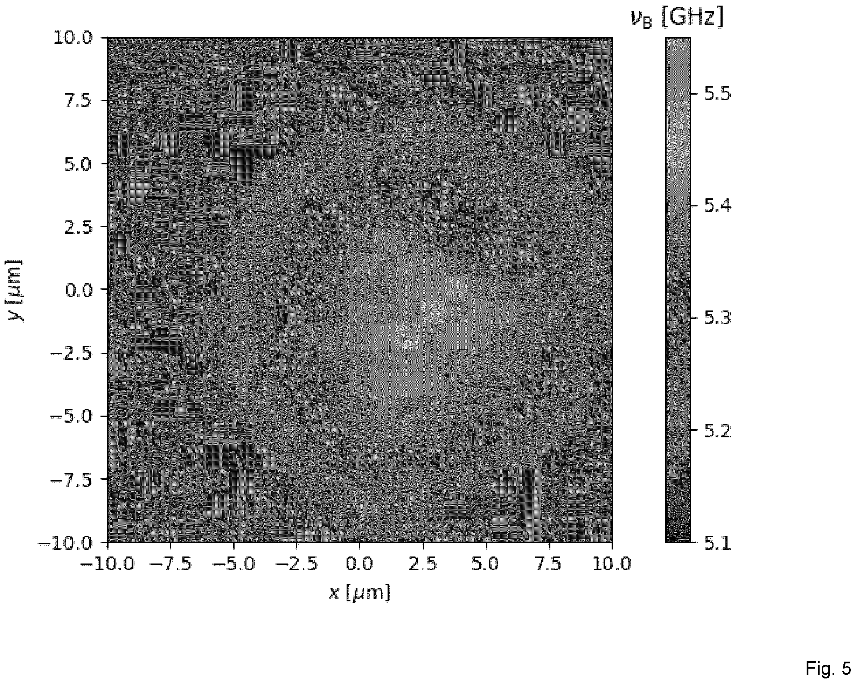

After scanning of the current scanning area 22 is completed (cf. Fig. 2b), a corresponding measurement value has been determined, and the focused laser light is moved to (aligned with) a further scanning area, which is subsequently scanned. Since the focused laser light is scanned across the sample 12 scanning area 21 by scanning area 21, a spatial scanning map 20 (Brillouin-map, Brillouin-scan) of Brillouin-shifts, Brillouin-widths, and preferably other characteristics of the Brillouin scattering is created. Each scanning area 21 corresponds to a localized mechanical property of the sample 12. In Fig. 5, an exemplary plot corresponding to a scanning map 20 is shown, comprising 20 × 20 scanning areas 21 with width 1.0 µm in both *x* direction and y direction.

The total measurement time required to determine such a Brillouin map 20 is an important parameter for determining sample properties, in particular for throughput and survival of a biological sample from photodamages. The total measurement time depends on experimental conditions such as the number of scanning areas 21 and the measurement time required to determine a Brillouin-spectrum in each scanning area 21. The number of scanning areas 21 mainly depends on the geometry of the sample 12 and is adjusted in accordance with its dimensions and a desired spatial resolution.

For Brillouin scattering, a scanning time and/or an integration time per scanning area 21 is generally in the order of 0.1 s to 1.0 s depending on the received number of scattered photons. This is due to the lower probability of a Brillouin scattering process compared to, e.g., Rayleigh scattering. A Brillouin-scan of a live cell a total scan area of 50 µm × 50 µm with 100 × 100 scanning areas 21 and typical measurement time of 0.1 s per scanning area may require a total scanning time of 10 000 scanning areas × 0.1 s = 1 000 s, which is about 17 minutes. For a typical scan of an organoid or tissue sample, a typical scan can have 500 × 500 scanning areas 21 with 0.1 s for each scanning area 21, resulting in a total measurement time of about 7 hours.

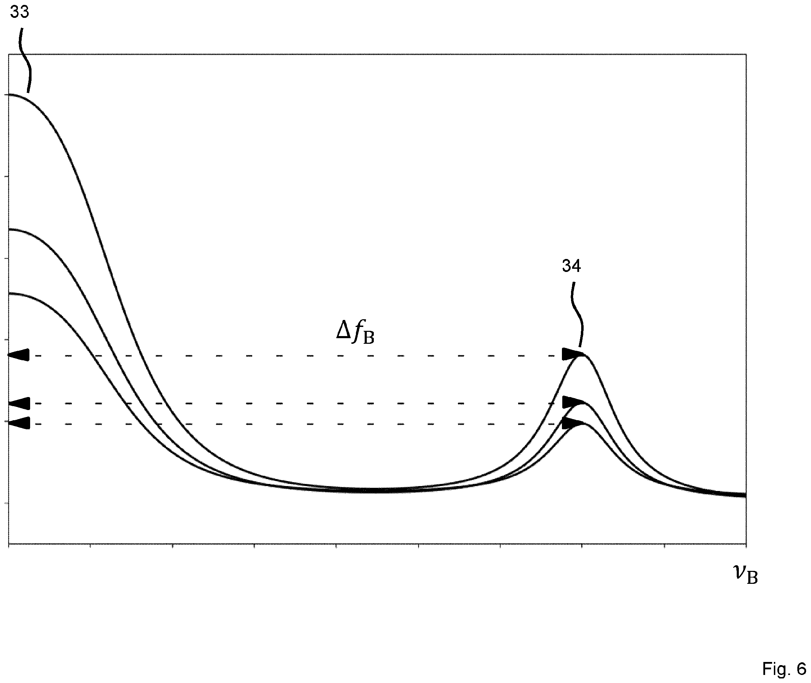

The measurement time (which is sensor/camera exposure time) of a Brillouin-spectrum for each scanning area 21 should be long enough to collect enough scattered photons and to resolve the Brillouin peak 34 in the spectrum (see Fig. 5). In general, the longer the measurement time and thus the greater the peak height of the Brillouin peak, the better the Brillouin shift and the Brillouin width can be determined (cf. Fig. 6, in which Brillouin spectra for different measurement times are depicted). Typically, this means that the Brillouin peak 34 should have a peak height (an intensity at the maximum of the peak) of at least 20 to 30 intensity units above a background noise level (at one intensity unit). Such a minimal required measurement time is defined by local scattering properties of the sample 12, which varies from point to point and can in general not be known in advance before the scan. For example, in some scanning areas 21, only 100 ms of measurement time may be necessary for determining the spectral measurement values with sufficient quality (e.g., achieving a minimum peak height threshold for the Brillouin peak 34). In other scanning areas 21, on the other hand, 300 ms or 500 ms of measurement time may be necessary. Typically, the measurement time is set to the longest necessary time (500 ms for the example above) for all scanning areas 21, leading to long total measurement times.

In contrast, according to the proposed method, the total measurement time required to determine the Brillouin map 20 is reduced by optimizing and tuning the measurement times for the scanning areas 21. To this end, the measurement time is determined individually for each scanning area 21 using a quality metric with respect to a target quality metric, the quality metric and the target quality metric indicative of at least one of a signal quality, a goodness of fit, a peak shape, and a peak height of the Brillouin peak 34.

For example, the signal quality may be determined from a signal-to-noise ratio and the peak height may be determined as a multiple (e.g., ten times) or a minimum offset (e.g., 20 intensity units) of background noise of the spectral measurement values. The peak shape, on the other hand, may e.g. be determined by a peak width estimate.

For determining the Brillouin shift and the Brillouin width, the spectral measurement values may be fitted (e.g., using a Lorentz curve or a linear combination of Lorentz curves). In this case, the quality metric may correspond to the goodness of fit of the spectral measurement values and spectral fitted values. The Brillouin shift and/or the Brillouin width may be determined from the spectral fitted values (in particular, from the fitted Brillouin peak).

In one example, the quality metric and the target quality metric may be used for determining the measurement time by using the target quality metric as a setpoint of a control system and the quality metric (e.g., with respect to previously scanned scanning areas 21a) as a process variable of the control system. In other words, the measurement time is automatically controlled by taking the quality metric (e.g., the height of the Brillouin peak 34) as a control parameter. The measurement time should be as short as possible to achieve the desired target quality metric. The control system may include a feedback-loop control mechanism, for example, a proportional-integral-derivative controller (PID controller or three-term controller). The PID controller adjusts the measurement time for each scanning area 21 using, e.g., the height of the Brillouin peak 34 or a *χ*² value for its fit as control parameter. Thus, instead of setting a fixed measurement time for all scanning areas 21, a single setpoint for a target quality metric is predetermined and the measurement time per scanning area 21 is varied using the feedback mechanism.

In another example, the quality metric and the target quality metric may be used for determining the measurement time by successively accumulating measurement data for the spectral measurement values and, during each accumulating step, determining the quality metric from the so far accumulated measurement data, and comparing the quality metric with the target quality metric.

In particular, the measurement time may be determined from partial measurement times as follows. Measurement data from the scattered light from the current scanning area 22 are collected (i.e., photons of the scattered light are counted) for the spectral measurement values for the duration of one of the partial measurement times, after which the quality metric from these spectral measurement values is determined and compared with the target quality metric. These steps are repeated, wherein the partial measurement times are successively passed through, until the quality metric conforms to the target quality metric.

For example, in case of the background noise being scaled at 1 a. u., measurement data (in particular, scattered photons) are collected, resulting in increasing peak heights of the Brillouin peak 34 (cf. Fig. 6), until the peak height of the Brillouin peak 34 reaches or surpasses a minimum peak height of 20 a. u. The minimum peak height is chosen such that the Brillouin shift and/or the Brillouin width can be determined with sufficient accuracy. At this time, the determining of the spectral measurement values is stopped and the passed time in units of partial measurements times corresponds to the measurement time for scanning the current scanning area 22. Subsequently, the focused laser light is moved to a next scanning area 21 and the determining of corresponding spectral measurement values is repeated for the next scanning area 21.

The measurement time can also be determined using both a control system and using partial measurement times. For example, the control system may provide an estimate for an initial measurement time, e.g., 300 ms, from which partial measurement times of 3 ms (1 % of 300 ms) are used for iteratively reaching the target quality metric.

The features disclosed in this description, the drawings and/or the claims may be material for the realization of various embodiments, taken in isolation or in various combinations thereof.

### Reference signs

- 10: laser source
- 11a: optical fiber
- 11b: optical coupler
- 11c: beam splitter
- 11d: mirror
- 11e: objective
- 12: sample
- 13: sample container
- 14: stage
- 15: detector
- 16: camera
- 17: data processing unit
- 18: casing
- 19: medium
- 20: scanning map
- 21: scanning area
- 21a: already scanned scanning area
- 21b: not yet scanned scanning area
- 22: active scanning area
- 30: spectrometer
- 31: sensor
- 32: sensor image
- 33: Rayleigh peak
- 34: Brillouin peak

## Claims

1. A method for Brillouin microscopy, the method comprising:
- scanning a sample (12) in a medium (19) with focused laser light along a plurality of scanning areas (21);
- during the scanning of the sample (12), for a current scanning area (22) of the scanning areas (21) currently being irradiated with the focused laser light:
- determining a measurement time for the current scanning area; and
- determining, using a detector (15), of a plurality of spectral measurement values from scattered light scattered from the current scanning area (22) for the duration of the measurement time;
wherein the measurement time is determined using a quality metric with respect to a target quality metric which is indicative of at least one of a signal quality, a goodness of fit, a peak shape, and a peak height of a Brillouin peak (34).

2. The method according to claim 1, wherein
- the signal quality is determined by a signal-to-noise ratio and/or
- the goodness of fit is determined by at least one of a root mean square error, a coefficient of determination, and a *χ*² value and/or
- the peak height is determined with respect to background noise of the spectral measurement values.

3. The method according to claim 1 or 2, wherein the measurement time is determined using a control system with a setpoint being the target quality metric and a process variable comprising the quality metric.

4. The method according to claim 3, wherein the control system comprises one of a PID controller, a PI controller, a PD controller, and a fuzzy controller.

5. The method according to any of the preceding claims, wherein the measurement time is determined from partial measurement times by
- collecting measurement data from the scattered light from the current scanning area (22) for the spectral measurement values for the duration of one of the partial measurement times,
- determining the quality metric from the spectral measurement values,
- comparing the quality metric with the target quality metric, and
- repeating the above steps until the quality metric conforms to the target quality metric, wherein the partial measurement times are run through successively.

6. The method according to claim 5, wherein the partial measurement times are at least partially determined from an initial measurement time, preferably from a fraction of the initial measurement time.

7. The method according to claim 3 and claim 6, wherein the initial measurement time is determined by the control system.

8. The method according to any of claims 5 to 7, wherein the partial measurement times are identical.

9. The method according to any of claims 5 to 7, wherein the partial measurement times successively decrease.

10. The method according to any of the preceding claims, further comprising:
- interpolating of or, using the detector (15), redetermining of previous spectral measurement values for at least one previously scanned scanning area (21 a) based on a Brillouin shift and/or a Brillouin width being determinable from the previous spectral measurement values.

11. The method according to any of the preceding claims, wherein a total number of scanning areas is between 10¹ and 10¹⁰, preferably between 10⁴ and 10⁵.

12. The method according to any of the preceding claims, wherein each of the scanning areas (21) has a length and/or a width between 0.5 µm and 100 µm.

13. The method according to any of the preceding claims, wherein the detector (15) comprises a sensor (31) being one of a CCD sensor, an EMCCD sensor, a CMOS sensor, and an sCMOS sensor.

14. The method according to any of the preceding claims, wherein the sample (12) is a biological sample comprising at least one of a cell, a part of a cell, cellular tissue, and an organoid.

15. A system for Brillouin microscopy configured to carry out the method according to any of the preceding claims.
